# EUROPEAN PATENT SPECIFICATION

(11) **EP 1 839 935 B1**
(45) Date of publication and mention of the grant of the patent: **21.07.2010**
(21) Application number: 06425194.5
(22) Date of filing: 23.03.2006
(51) Int. Cl.: B60N 2/28

(54) **Snapping adjustable device between a reciprocally mobile support and structure**
Verstellbare Rastvorrichtung zwischen einer Struktur und einem dazu beweglichen Halter
Dispositif d'ajustement par encliquetage entre un support mobile et une structure

(43) Date of publication of application: 03.10.2007
(73) Proprietor: SABELT S.p.A., 10129 Torino (IT)
(72) Inventor: Gastaldi, Roberto, 10143 Torino (IT)
(74) Representative: Cerbaro, Elena

(56) References cited:
- EP-A- 0 970 842
- EP-A- 1 600 325

## Description

The present invention relates to a snapping adjustment device between a reciprocally mobile support and structure. In particular, the invention relates to an adjustment device between a support of fixed structure on a child carries seat, and a mobile structure with respect to the child seat and adapted to be arranged on the seat of a motor vehicle.

Various snapping adjustment devices are known, in which the mobile structure is provided with a rack, adapted to be engaged in a snapping member carried by the support of the child seat. These devices are generally poorly efficient and make the sliding of the support relatively difficult.

In older to facilitate such sliding, a snapping adjustment device according to the preamble of claim 1 was also proposed in document EP 1 600 325 A. Therein each rack is engaged by a corresponding snapping mechanism, having two locking members distanced by little less than one pitch of the rack. For releasing each locking member from each rack, a knob integral with a pair of cams, each having a portion adapted to simultaneously release the locking members, is provided. This device is however relatively complex and expensive.

From document EP 0 970 842 A, it is known a connecting device for a child safety seat comprising a chassis carried by a pair of parallel profiles and provided with a single saw-toothed rack engaged by a projection of a handle pivotally mounted in a carrier slidable along the profiles.

It is an object of the invention to make a snapping adjustable device of the aforesaid type, which is highly reliable and cost-effective, eliminating the drawbacks of adjustment devices of the known art.

According to the invention, this object is obtained by a snapping adjustment device between a reciprocally mobile support and a structure, as defined in claim 1.

For a better understanding of the invention, a preferred embodiment will now be described by way of example, with reference to the accompanying drawings, in which:
figure 1 is a partial perspective view of a child carrier seat, provided with a snapping adjustable device according to the invention;
figure 2 is a lateral view of a detail of the device in figure 1, on magnified scale, in an operative, drawn-up position;
figure 3 is the detail of figure 2, in the extracted operating position of figure 1;
figure 4 is a cross section of the device in figure 1;
figure 5 is a detail of figure 3, in a further operative position;
figure 6 is a partial cross section of a variant of figure 1, on a slightly magnified scale.

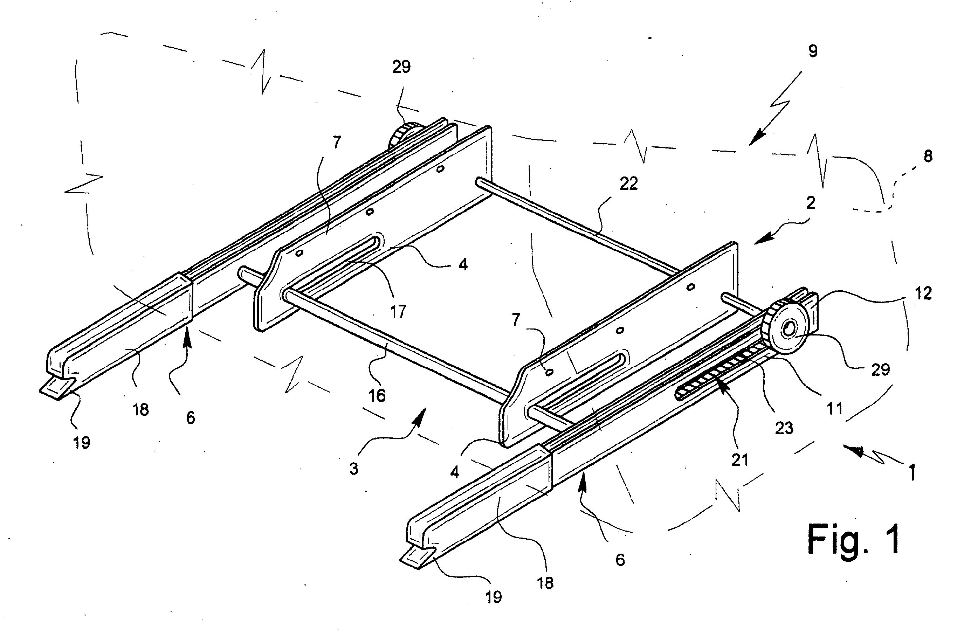

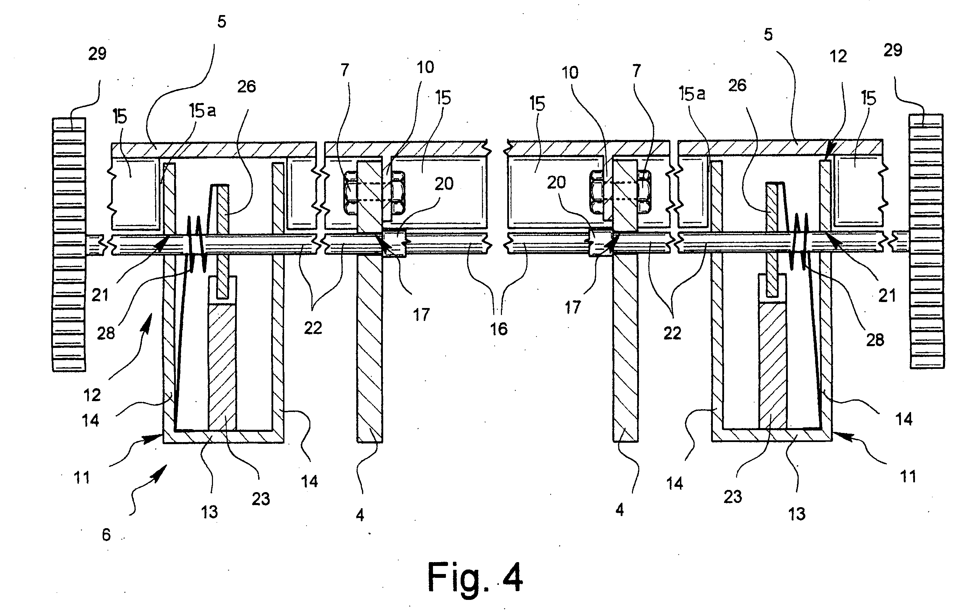

With reference to figure 1, reference number 9 generically indicates the usual child carrier seat, adapted to carry children on a seat of a motor vehicle, not shown in the drawings. Reference number 1 generically indicates a snapping adjustment device between a support 2 and a structure 3, which are reciprocally mobile. In particular, the support 2 constitutes a fixed structure of the child seat 9, while structure 3 is mobile with respect to the child seat 9. On support 2 the usual padded child seat 8, indicated with the broken lines in figure 1, is fixed by means of a shaped bottom plate 5, schematically indicated in figure 4.

Furthermore, the support 2 comprises at least two essentially vertical plates 4, each fixed by bolts 7 onto a corresponding rib 10 of the bottom plate 5. In turn, the mobile structure 3 is formed by two corresponding longitudinal straight profiles 6 connected together by means of at least one transversal bar 16, so as to form a perfectly stiff structure 3. Each plate 4 is provided with a longitudinal slot 17 engaging with a transversal bar 16, and adapted to prevent the forward tipping of the support 2.

Each longitudinal profile 6 of the structure 3 comprises a front portion 11 formed by a U-profile 12 (figure 4) having a horizontal flank 13 and two reciprocally parallel vertical wings 14. The bottom plate 5 lowerly exhibits at least two transversal walls 15, which are provided with two interruptions 15a, each of which clasps a corresponding U-profile 12.

Finally, each longitudinal profile 6 comprises a rear portion 18 (figure 1) formed by a boxed profile. The portion 18 rearly terminates with a shaped end 19, "commonly called crocodile", which is adapted to engage, in a known way, a corresponding anchoring member, for example a pin fixed to the back of the motor vehicle rear seat backrest, with an anchoring system commonly known as ISOFIX.

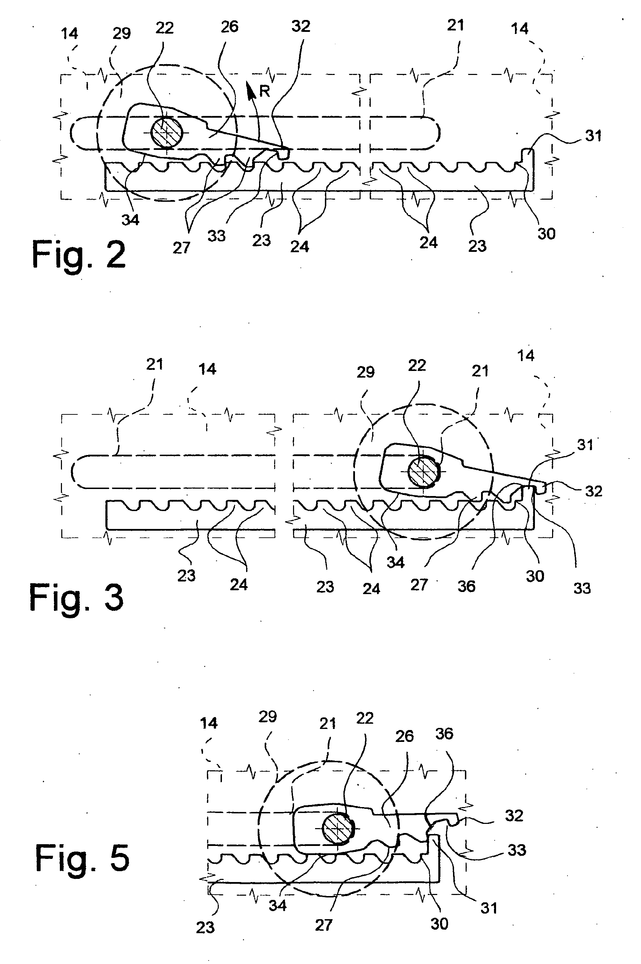

The two wings 14 (figure 4) of each U-profile 12 are provided with two corresponding slots 21, in which a circular section bar 22 may longitudinally slide. The bar 22 is turnably mounted on the two plates 4 and is provided with at least two flanges 20, which prevent transversal sliding on the plates 4. On the flank 13 of each U-profile 12, inside this and parallelly to the wings 14, is fixed, for example by welding, a rack 23 (figure 2) having essentially trapezoidal shaped saw teeth 24.

At each plate 4, on the turning bar 22 is fixed a snapping member, constituted by a pawl 26 having at least one tooth 27 adapted to be engaged between two saw teeth 24 of the rack 23. For this purpose, elastic means formed by two torsion springs 28 (figure 4), which are fastened in the known way, with one end on of the wings 14 of the corresponding profile 12, and with the other end on the pawl 26.

Advantageously, each pawl 26 (also see figure 2) is lowerly provided with two teeth 27, which are distanced according to the pitch of the rack 23. The two teeth 27 thus ensure the snapping engagement of the pawl 26 and the rack 23. Finally, manual means are envisaged for releasing the two pawls 26 from the racks 23. In particular, the manual means comprise two knurled knobs 29 fastened to the two ends of the turning bar 22, on the outside of the corresponding profile 12. Obviously, in use it is sufficient to operate only one of the two knobs 29.

The saw teeth 24 of the racks 23 and the teeth 27 of the pawls 26 are formed so as to allow a snapping movement of the pawls 26 in a first direction, i.e. backwards (leftwards in figure 2), without operating any knob 29. Instead, to shift the plates 4 forward (rightwards in figure 2), one of the knobs 29 must be turned anticlockwise, as shown in figure 2 by arrow R. The turning bar 22 is then turned, along with the two pawls 26, against the bias of the springs 28, so as to simultaneously release the teeth 27 from the racks 23. With the teeth 27 thus released, it is sufficient to push the support forward, for example by acting on the seat 8.

The front end of each rack 23 is provided with a lock tooth 31, which determines a forward end of stroke position of the support 2. The lock tooth 31 (also see figure 5) is higher than the saw teeth 24. The lock tooth 31 also exhibits a step 30 aligned with the external cutting of the saw teeth 24.

In turn, each of the pawls 26 is provided with an additional tooth 32, associated to a compartment 33 adapted to engage the tooth 31, to prevent the release of the plates 4 from the longitudinal profiles 6, at the end of forward stroke. Each pawl 26 exhibits an edge 34 adapted to engage the rack 23, as in figure 5, to limit rotation. Compartment 33 of the pawl 26 is provided with an edge 36 longer than that of the compartment between the teeth 27. The edge 36 is formed so as to allow the teeth 27 to release the saw teeth 24, without releasing the edge 36 from the lock tooth 31, when the support 2 is in extracted position, i.e. at the end of forward stroke, as shown in figure 1. The lock tooth 31 and the additional tooth 32 are shaped so as to require a slight rotation of the support 2 to release tooth 32 from tooth 31.

The snapping adjustment device 1 works as follows.

In figure 1, support 2 of seat 8 is in extracted position, with pawls 26 in the position of figure 3. Normally, the child seat 9 to be fastened to the motor vehicle seat is in a drawn-up position, in which the springs 28 hold the pawls 26 with teeth 27 fastened to teeth 24 of the racks 23, as shown in figure 2. To fasten the child seat 9 to the supports of the motor vehicle seat, one of the knobs 29 is initially turned in the direction of the arrow R, so as to release the pawls 26 from the racks 23. The child seat 9 is then pulled forward, extracting the support 2 along the longitudinal profiles 6 to end of stroke, so that the pawls 26 are taken to the position shown in figure 5. By now freeing knob 29, the springs 28 (also see figure 4) return the pawls 26 to engage the respective compartment 33 on the lock tooth 31 of the corresponding rack 23 as shown in figure 3.

The two shaped ends 19 of the portions 18 are now fastened to the supports of the rear seat of the motor vehicle, and one of the knobs 29 is turned again so as to release each tooth 32 from the respective tooth 31 as shown in figure 5. For this purpose, the support 2 is turned slightly back by means of the seat 8 until each tooth 32 is taken behind the corresponding lock tooth 31.

The knob 29 can now be released and seat 8 pushed backwards with the support 2, making the teeth 27 skip on the pawls 26, so that the support 2 shifts longitudinally with respect to the structure 3, until the seat 8 rests against the motor vehicle rear seat backrest. The teeth 27 of the racks 26, by engaging the teeth 24 of the respective racks 23, as shown in figure 2, now prevent any forward shift of support 2 and seat 8, also in the event of sudden braking. In turn, the engagement of slots 17 with transversal bar 16 prevents the forward tipping of the support 2.

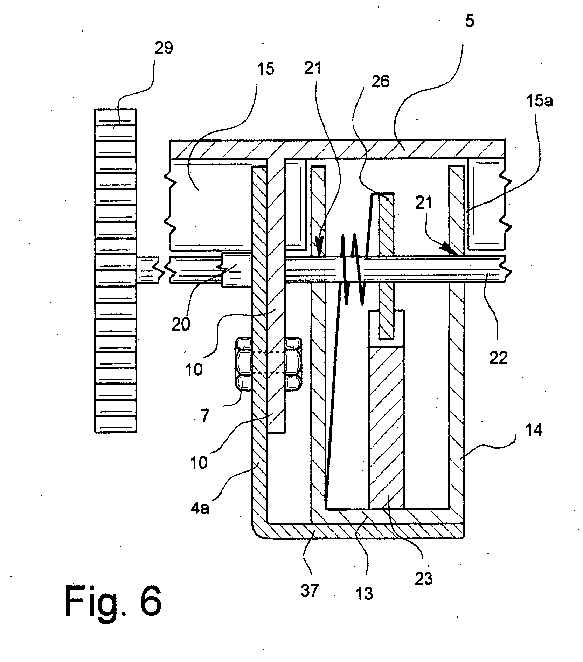

Since the plates 4 of the support 2 of the child seat 9 are subjected to strong stresses, in the variant of figures 1 and 4 these exhibit a considerable thickness. According to the variant of figure 6, support 2 advantageously comprises two plates 4a having reduced thickness, only one of which is shown in the drawings. Each plate 4a is provided with a folded strip 37 arranged horizontally, so that the plate 4a exhibits an L-section. The plates 4a are arranged on the outside with respect to the corresponding U-profiles 12 of the structure 3.

Each plate 4a is connected, by means of screws 7, to a corresponding rib 10 of the bottom plate 5 of the child seat 9. The strip 37 of each plate 4a, engages the flank 13 of the corresponding U-profile 12, and thus ensures the anti-tipping function of the child seat. Therefore, each plate 4a has no slot 17 in figure 1, therefore it is further considerably stronger.

According to a further variant not shown in the drawings, the support 2 comprises two U-section plates, each provided with two wings arranged on opposite sides with respect to the U-profile 12. One of these wings is connected to the corresponding rib 10 of the bottom plate 5, while the other wing is provided with a discharge for the passage of the bar 16 of the structure 3. The anti-tipping function may also be in this case made by the horizontal flank connecting the two inner wings of the two longitudinal profiles 6 of the support 2.

From the above, the advantages that the adjustment device 1 and the respective child seat 9 according to the invention allow to obtain with respect to the known art are apparent. In particular, the adjustment device 1 is very simple in operation and less expensive to be manufactured.

It is understood that the adjustment device and the child seat described may be changed and perfected as long as the changes remain within the scope of the invention, which is defined by the claims. For example, the adjustment device 1 may be provided with only one knob 29. Furthermore, each knob 29 may be replaced by a lever. Each transversal wall 15 of the bottom plate 5 may be formed by two separate portions associated to the two ribs 10, while the flanges 20 may be arranged so as to engage the inner wings of the two longitudinal profiles 6. Finally, each longitudinal profile 6 and/or each plate 4 of the support 2 may have a different section than that described above.

## Claims

1. A snapping adjustment device between a reciprocally mobile support (2) and a structure (3), in which the support (2) comprises at least two parallel plates (4) reciprocally connected, mobile and sliding on two corresponding longitudinal profiles.(6) of said structure (3), each of said longitudinal profiles (6) being rigidly connected with a saw tooth (24) rack (23), each of said plates (4) comprising a corresponding snapping member (26) normally held to engage with the corresponding rack (23) by elastic means (28); a turning bar (22) carried by said plates (4) being operated by manual means (29) to simultaneously release said snapping members (26) from said racks (23); **characterized in that** each of said snapping members is formed by a pawl (26) fixed to the turning bar (22) comprising at least one tooth (27) adapted to be engaged between two saw teeth (24) of the corresponding rack (23); said saw teeth (24) of said racks (23) are formed so as to allow a snapping movement of said pawl (26) in a first direction without operating said manual means (29); each of said racks (23) being provided with a lock tooth (31) in an end of stroke in a direction opposite to said first direction, each of said pawls (26) comprising an additional tooth (32) adapted to engage said lock tooth (31) in said end of stroke position.

2. An adjustment device according to claim 1, **characterized in that** each of said pawls (26) comprises at least two teeth (27) adapted to engage two adjacent saw teeth (24) of the corresponding rack (23).

3. An adjustment device according to any one of the preceding claims, **characterised in that** said additional tooth (32) is associated to a compartment (33) of said pawl (26) so as to prevent the release of said lock tooth (31) in said end of stroke position.

4. An adjustment device according to any one of the preceding claims, **characterised in that** each of said longitudinal profiles (6) comprises a portion 11 formed by a U-profile (12) provided with a flank (13) and two wings (14), said turning bar (22) being sliding on two slots (21) arranged on the two wings (14) of the corresponding U-profile (12), each of which racks (23) being fastened to the flank (13) of the corresponding U-profile (12).

5. An adjustment device according to claim 4, **characterised in that** said manual means comprise at least one knob (29) fixed on said turning bar (22) outside one of said U-profiles (12).

6. An adjustment device according to claim 5, **characterised in that** said U-profiles (12) are connected together by a second bar (16) parallel to said turning bar (22), said plates (4) being provided each with a corresponding longitudinal slot (17) for engaging second bar (16) so as to prevent the forward tipping of said structure (2).

7. An adjustment device according to claim 5, **characterised in that** said U-profiles (12) are connected together by a second bar (16) parallel to said turning bar (22), said plates (4a) each being formed with a bent strip 37 so as to engage said flank (13) of the corresponding U-profile (12) so as to prevent the forward tipping of said structure (2).

8. An adjustment device according to any one of the preceding claims, in which said support (2) and said structure (3) are envisaged for a child carrier seat (9), adapted to be arranged on a motor vehicle seat, **characterised in that** said longitudinal profiles (6), comprise another portion (18) having a shaped end (19) adapted to engage with corresponding anchoring elements fixed to said seat.

9. A child seat anchoring system on a motor vehicle seat, **characterised in that** it comprises a snapping adjustable device (1) between a reciprocally mobile support (2) and a structure (3) according to any one of the preceding claims.

10. A child seat, **characterised in that** it comprises a child seat anchoring system on a motor vehicle seat according to claim 9.

## Patentansprüche

1. Verstellbare Einrastvorrichtung zwischen einem Halter (2) und einer Struktur (3), die zueinander beweglich ausgebildet sind, wobei der Halter (2) zumindest zwei parallele, miteinander verbundene Platten (4) aufweist, die beweglich ausgebildet sind und auf zwei entsprechenden Längsprofilen (6) der Struktur (3) gleiten, wobei jedes dieser Längsprofile (6) fest mit einer Sägezahn(24)-Stange (23) verbunden ist, wobei jede der Platten (4) ein entsprechendes Einrastelement (26) aufweist, das normalerweise von elastischen Vorrichtungen (28) gehalten wird, um in die entsprechende Zahnstange (23) einzugreifen; wobei eine von diesen Platten (4) getragene Drehstange (22) von manuellen Vorrichtungen (29) bedient wird, um die Einrastelemente (26) gleichzeitig aus den Zahnstangen (23) zu lösen; **dadurch gekennzeichnet, dass** jedes der Einrastelemente von einer an der Drehstange (22) befestigten Sperrklinke (26) gebildet ist, welche zumindest einen Zahn (27) aufweist, der dafür eingerichtet ist, zwischen zwei Sägezähnen (24) der entsprechenden Zahnstange (23) in Eingriff zu gelangen; wobei die Sägezähne (24) der Zahnstangen (23) derart ausgebildet sind, dass sie eine Einrastbewegung der Sperrklinke (26) in eine erste Richtung ohne Bedienung der manuellen Vorrichtungen (29) zulassen; wobei jede der Zahnstangen (23) mit einem Verriegelungszahn (31) an einem Anschlagsende in einer der ersten Richtung entgegen gesetzten Richtung versehen ist, wobei jede der Sperrklinken (26) einen zusätzlichen Zahn (32) aufweist, der dafür eingerichtet ist, in den Verriegelungszahn (31) in der Anschlagsendposition einzugreifen.

2. Einstellvorrichtung gemäß Anspruch 1, **dadurch gekennzeichnet, dass** jede der Sperrklinken (26) zumindest zwei Zähne (27) aufweist, die dafür eingerichtet sind, in zwei angrenzende Sägezähne (24) der entsprechenden Zahnstange (23) einzugreifen.

3. Einstellvorrichtung gemäß irgendeinem der vorherigen Ansprüche, **dadurch gekennzeichnet, dass** der zusätzliche Zahn (32) mit einer Abteilung (33) der Sperrklinke (26) verbunden ist, so dass das Lösen des Verriegelungszahnes (31) in der besagten Anschlagsendposition verhindert wird.

4. Einstellvorrichtung gemäß irgendeinem der vorherigen Ansprüche, **dadurch gekennzeichnet, dass** jedes der Längsprofile (6) einen von einem U-förmigen Profil (12) gebildeten Bereich (11), der mit einer Flanke (13) und zwei Flügeln (14) versehen ist, aufweist, wobei die Drehstange (22) auf zwei Schlitzen (21) gleitet, welche auf den beiden Flügeln (14) des entsprechenden U-förmigen Profils (12) angeordnet sind, wobei jede der Zahnstangen (23) an der Flanke (13) des entsprechenden U-förmigen Profils (12) befestigt ist.

5. Einstellvorrichtung gemäß Anspruch 4, **dadurch gekennzeichnet, dass** die manuellen Vorrichtungen zumindest einen an der besagten Drehstange (22) außerhalb eines der U-Förmigen Profile (12) befestigten Knopf (29) aufweisen.

6. Einstellvorrichtung gemäß Anspruch 5, **dadurch gekennzeichnet, dass** die besagten U-förmigen Profile (12) durch eine zweite Stange (16), die parallel zu der Drehstange (22) liegt, miteinander verbunden sind, wobei die Platten (4) jeweils mit einem entsprechenden Längsschlitz (17) zum Eingreifen der zweiten Stange (16) versehen sind, um so zu verhindern, dass die Struktur (2) nach vorne kippt.

7. Einstellvorrichtung gemäß Anspruch 5, **dadurch gekennzeichnet, dass** die U-förmigen Profile (12) durch eine zweite Stange (16), die parallel zu der Drehstange (22) liegt, miteinander verbunden sind, wobei die Platten (4) jeweils mit einer gebogenen Leiste (37) ausgebildet sind, um in die Flanke (13) des entsprechenden U-förmigen Profils (12) einzugreifen, um so zu verhindern, dass die Struktur (2) nach vorne kippt.

8. Einstellvorrichtung gemäß irgendeinem der vorherigen Ansprüche, wobei der Halter (2) und die Struktur (3) für einen Kindertragesitz (9) vorgesehen sind, welcher dafür eingerichtet ist, auf einem Kraftfahrzeugsitz angeordnet zu werden, **dadurch gekennzeichnet, dass** die Längsprofile (6) einen weiteren Bereich (18) mit einem geformten Ende (19) aufweisen, welcher dafür eingerichtet ist, in entsprechende, an dem Sitz befestigte Verankerungselemente einzugreifen.

9. Verankerungssystem für einen Kindersitz auf einem Kraftfahrzeugsitz, **dadurch gekennzeichnet, dass** es eine verstellbare Einrastvorrichtung (1) zwischen einem Halter (2) und einer Struktur (3), die zueinander beweglich ausgebildet sind, gemäß irgendeinem der vorherigen Ansprüche aufweist.

10. Kindersitz, **dadurch gekennzeichnet, dass** er ein Verankerungssystem für einen Kindersitz auf einem Kraftfahrzeugsitz gemäß Anspruch 9 aufweist.

## Revendications

1. Dispositif de réglage par encliquetage entre un support mobile en va-et-vient (2) et une structure (3), dans lequel le support (2) comprend au moins deux plaques parallèles (4) reliées, mobiles et coulissantes en va-et-vient sur deux profilés longitudinaux correspondants (6) de ladite structure (3), chacun desdits profilés longitudinaux (6) étant relié rigidement à une crémaillère (23) à dents de scie (24), chacune desdites plaques (4) comprenant un élément d'encliquetage correspondant (26) normalement retenu pour entrer en prise avec la crémaillère correspondante (23) par des moyens élastiques (28) ; une barre rotative (22) supportée par lesdites plaques (4) étant actionnée par des moyens manuels (29) pour libérer simultanément lesdits éléments d'encliquetage (26) desdites crémaillères (23) ; **caractérisé en ce que** chacun desdits éléments d'encliquetage est formé par un cliquet (26) fixé à la barre rotative (22) comprenant au moins une dent (27) adaptée pour être en prise entre deux dents de scie (24) de la crémaillère correspondante (23) ; lesdites dents de scie (24) desdites crémaillères (23) sont formées afin de permettre un mouvement d'encliquetage dudit cliquet (26) dans une première direction sans actionner lesdits moyens manuels (29) ; chacune desdites crémaillères (23) étant pourvue d'une dent de verrouillage (31) dans une fin de course dans une direction opposée à ladite première direction, chacun desdits cliquets (26) comprenant une dent supplémentaire (32) adaptée pour entrer en prise avec ladite dent de verrouillage (31) dans ladite position de fin de course.

2. Dispositif de réglage selon la revendication 1, **caractérisé en ce que** chacun desdits cliquets (26) comprend au moins deux dents (27) adaptées pour entrer en prise avec deux dents de scie adjacentes (24) de la crémaillère correspondante (23).

3. Dispositif de réglage selon l'une quelconque des revendications précédentes, **caractérisé en ce que** ladite dent supplémentaire (32) est associée à un compartiment (33) dudit cliquet (26) afin d'empêcher la libération de ladite dent de verrouillage (31) dans ladite position de fin de course.

4. Dispositif de réglage selon l'une quelconque des revendications précédentes, **caractérisé en ce que** chacun desdits profilés longitudinaux (6) comprend une partie (11) formée par un profilé en U (12) pourvu d'un flanc (13) et deux ailes (14), ladite barre rotative (22) coulissant sur deux fentes (21) agencées sur les deux ailes (14) du profilé en U correspondant (12), chacune desdites crémaillères (23) étant fixée au flanc (13) du profilé en U correspondant (12).

5. Dispositif de réglage selon la revendication 4, **caractérisé en ce que** lesdits moyens manuels comprennent au moins un bouton (29) fixé sur ladite barre rotative (22) à l'extérieur d'un desdits profilés en U (12).

6. Dispositif de réglage selon la revendication 5, **caractérisé en ce que** lesdits profilés en U (12) sont reliés l'un à l'autre par une seconde barre (16) parallèle à ladite barre rotative (22), lesdites plaques (4) étant pourvues chacune d'une fente longitudinale correspondante (17) pour entrer en prise avec la seconde barre (16) afin d'empêcher le basculement vers l'avant de ladite structure (2).

7. Dispositif de réglage selon la revendication 5, **caractérisé en ce que** lesdits profilés en U (12) sont reliés l'un à l'autre par une seconde barre (16) parallèle à ladite barre rotative (22), lesdites plaques (4a) étant chacune formée avec une bande cintrée (37) afin d'entrer en prise avec ledit flanc (13) du profilé en U correspondant (12) afin d'empêcher le basculement vers l'avant de ladite structure (2).

8. Dispositif de réglage selon l'une quelconque des revendications précédentes, dans lequel ledit support (2) et ladite structure (3) sont envisagés pour un siège de sécurité pour enfant (9), adapté pour être agencé sur un siège de véhicule motorisé, **caractérisé en ce que** lesdits profilés longitudinaux (6) comprennent une autre partie (18) possédant une extrémité façonnée (19) adaptée pour entrer en prise avec des éléments d'ancrage correspondants fixés audit siège.

9. Système d'ancrage de siège de sécurité pour enfant sur un siège de véhicule motorisé, **caractérisé en ce qu'**il comprend un dispositif de réglage par encliquetage (1) entre un support mobile en va-et-vient (2) et une structure (3) selon l'une quelconque des revendications précédentes.

10. Siège de sécurité pour enfant, **caractérisé en ce qu'**il comprend un système d'ancrage de siège de sécurité pour enfant sur un siège de véhicule motorisé selon la revendication 9.
